# EUROPEAN PATENT APPLICATION

(11) **EP 2 103 484 A2**
(43) Date of publication of application: **23.09.2009**
(21) Application number: 09003218.6
(22) Date of filing: 05.03.2009
(51) Int. Cl.: B60Q 1/14, B60Q 1/38

(54) **Left/right turn indicator for vehicle**

(30) Priority: 18.03.2008 JP 2008069751
(71) Applicant: Noguchi, Hiroshi, Higashishinmachi Iwakura-shi Aichi 482-0001 (JP)
(72) Inventor: Noguchi, Hiroshi, Higashishinmachi Iwakura-shi Aichi 482-0001 (JP)
(74) Representative: Kuhnen & Wacker

(57) **Abstract**

In response to a left turn operation of a turn signal lever (19) when left and right headlights (12,13) provided on the left and right sides of a front part of a vehicle (10) are turned on, a left turn signal light is turned on, and, at the same time, a left main light is made into a turned-off state corresponding to left turn indication. When a right turn operation of the turn signal lever (19) is performed, a right turn signal light is turned on, and, at the same time, a right main light is made into a turned-off state corresponding to right turn indication in response to this operation. In a dark environment such as nighttime, oncoming vehicles and pedestrians can surely know the left or right turning of the vehicle based on the change in the main lights from a normal lighting state to the turned-off state.

## Description

### BACKGROUND OF THE INVENTION

### Field of the Invention

The present invention relates to a left/right turn indicator for a vehicle, which clearly informs oncoming vehicles and pedestrians of left or right turning of the vehicle during nighttime and the like.

### Description of the Related Art

For the purpose of informing oncoming vehicles and pedestrians of left or right turning of a vehicle, a turn signal light, provided near a left or right headlight on the front side of the vehicle, blinks in response to the operation of a turn signal lever. However, in a dark environment such as nighttime, a headlight with high brightness is turned on on the front face side of the vehicle. Therefore, it is hard for oncoming vehicles and pedestrians to see the turn signal light provided near the headlight and blinking at low brightness, whereby it is often difficult for the oncoming vehicles and the pedestrians to clearly distinguish whether the vehicle will turn in the left or right direction. Especially, when there are vehicles behind the vehicle, it may become harder to see the turn signal light of the vehicle in front due to the light from the headlights of the vehicles behind.

As shown in, for example, Japanese Patent Application Laid-Open Publication No. 5-229384, there has been known a left/right turn clarifying device, which has the conventional turn signal lights and one or more light emitting bodies provided on the left and right outer sides of a vehicle body. When a turn signal switch is operated for a left or right turn operation of the vehicle, the left or right turn signal is turned on, and, at the same time, the left or right light emitting body is also turned on. However, in this left/right turn clarifying device, since the left and right light emitting bodies are provided at a distance from the left and right turn signal lights, the relation between the light emitting bodies and the turn signal lights is difficult to understand, leading to confusion. Further, since one or more light emitting bodies should be provided on the left and right outer sides of a vehicle, the mounting cost is increased.

The present invention is made to solve the above problems, and its object is to provide a left/right turn indicator for a vehicle, which can easily and clearly inform oncoming vehicles and pedestrians of left or right turning state of the vehicle in a dark environment such as nighttime.

### SUMMARY OF THE INVENTION

In order to achieve the above object, the present invention has the following features in constitution. In the left/right turn indicator for a vehicle of the present invention, left and right headlights are provided on left and right sides of a front part of the vehicle. In response to a left turn operation of a turn signal lever provided in the vehicle, the left headlight is changed from a normal lighting state to left turn indication. In response to a right turn operation of the turn signal lever, the right headlight is changed from a normal lighting state to right turn indication. The left turn indication corresponds to turning off of the left headlight or rendering the brightness of the left headlight smaller than the brightness in the normal lighting state. The right turn indication corresponds to turning off of the right headlight or rendering the brightness of the right headlight smaller than the brightness in the normal lighting state.

More specifically, the left/right turn indicator for a vehicle of the present invention includes a headlight driving unit, a left/right turn detection unit, and a lighting control device. The headlight driving unit turns on and off left and right headlights provided on left and right sides of the front part of the vehicle. The left/right turn detection unit detects left or right turn operation of a turn signal lever provided in the vehicle. The lighting control device controls the operation of the headlight driving unit. Based on the control from the lighting control device, the headlight driving unit operates the left headlight so that the left headlight performs left turn indication in response to a left turn detection result from the left/right turn detection unit, and the headlight driving unit operates the right headlight so that the right headlight performs right turn indication in response to a right turn detection result from the left/right turn detection unit. The left turn indication executed by the headlight driving unit corresponds to turning off of the left headlight or rendering the lighting brightness of the left headlight smaller than the brightness in the normal lighting state. The right turn indication executed by the headlight driving unit corresponds to turning off of the right headlight or rendering the lighting brightness of the right headlight smaller than the brightness in the normal lighting state.

The left and right headlights respectively may have a main light and a small light. In this case, while the main light is turned off, the small light is turned on or the brightness is smaller than the brightness in the normal lighting. Alternatively, while the brightness of the main light is smaller than the brightness in the normal lighting, the small light is turned on or the brightness is smaller than the brightness in the normal lighting. These patterns are included in the present invention.

According to the present invention constituted as described above, when the left and right headlights provided on the left and right sides of the front part of the vehicle are turned on, the left headlight being turned on is turned off or the brightness is smaller than the brightness in the normal lighting in response to the left turn operation of the turn signal lever provided in the vehicle. When the right turn operation of the turn signal lever is performed, the right headlight being turned on is turned off or the brightness is smaller than the brightness in the normal lighting in response to the operation. According to this constitution, blinking of the left and right turn signal lights is relatively clearly recognized. Consequently, it is convenient because, in a dark environment such as nighttime where the headlights are turned on, oncoming vehicles and pedestrians can clearly recognize the change in the headlight from the normal lighting state to the left or right turn indication, and thus can surely know the left or right turning of the vehicle, and, at the same time, it is very useful in view of road safety. Further, according to the present invention, the existing headlight can be used as it is, whereby the left and right turn indications can be performed at low cost by using the left and right headlights.

Further, according to the present invention, in response to the left or right turn operation of the turn signal lever, the left or right turn indication can be selected, or the left or right turn indication cannot be selected. According to this constitution, by using indication selection means, it is possible to select whether the left or right headlight is caused to perform the left or right turn indication by means of the headlight driving unit or the left or right headlight is kept in the normal lighting state, in accordance with road conditions, driving time, and so on.

### BRIEF DESCRIPTION OF THE DRAWINGS

FIG. 1 is a front perspective view of a vehicle according to an embodiment of the present invention;
FIG. 2 is a schematic perspective view around a steering of the vehicle;
FIG. 3 is a block diagram showing a circuit configuration of a left/right turn indicator of the vehicle;
FIG. 4 is a flow chart showing a "turn signal control program" executed by a lighting control device of the left/right turn indicator; and
FIG. 5 is a flow chart showing a "headlight control program" executed by the lighting control device of the left/right turn indicator.

### DETAILED DESCRIPTION OF THE PREFERRED EMBODIMENT

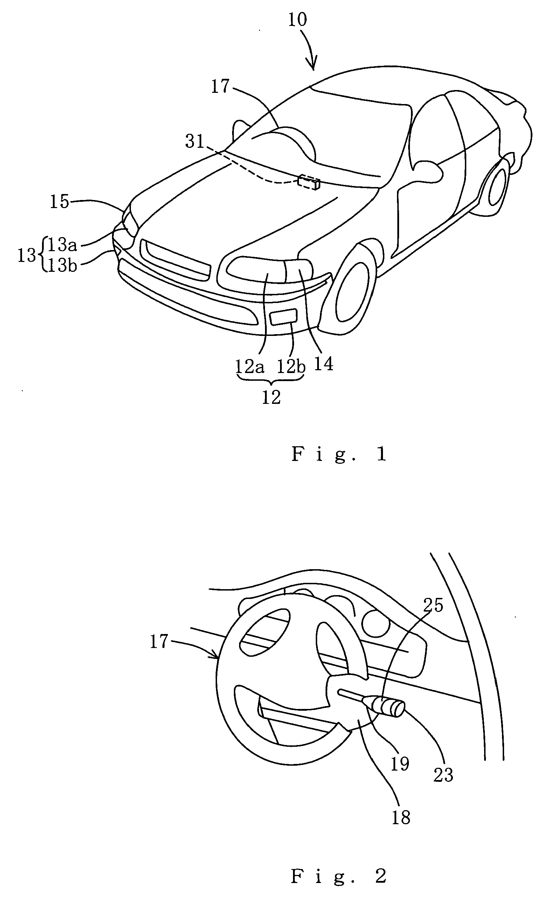

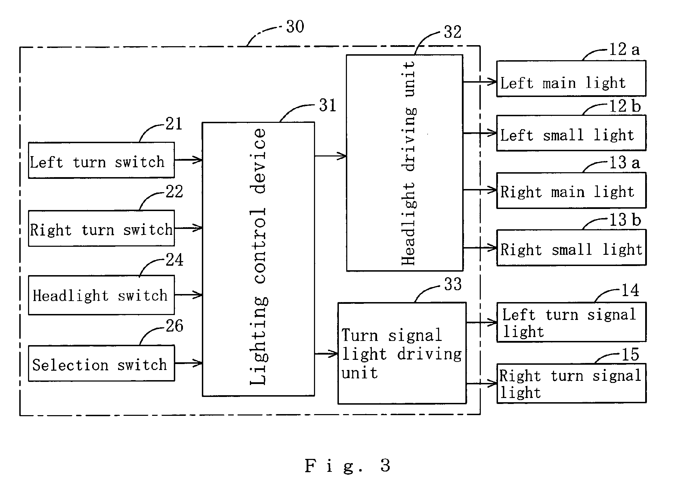

Hereinafter, an embodiment of the present invention will be described using the drawings. FIG. 1 is a perspective view of a vehicle using a left/right turn indicator according to the embodiment. FIG. 2 is a perspective view around a steering of the vehicle. FIG. 3 is a block diagram of the left/right turn indicator. A left/right turn indicator 30 includes a headlight driving unit 32, a turn signal light driving unit 33, a left turn switch 21, a right turn switch 22, and a lighting control device 31, etc. The headlight driving unit 32 turns on or off left and right headlights 12 and 13 respectively provided on the left and right sides of the front part of a vehicle 10. The turn signal light driving unit 33 turns on or off left and right turn signal lights 14 and 15. The left and right turn switches 21 and 22 are left/right turn detection units for detecting left and right turn operations of a turn signal lever 19 provided in the vehicle 10. When the left and right turn switches 21 and 22 detect the left turn operation, the lighting control device 31 causes the headlight driving unit 32 to change the left headlight 12 from a normal lighting state to left turn indication in accordance with the detection result. Meanwhile, when the right turn operation is detected, the lighting control device 31 causes the headlight driving unit 32 to change the right headlight 13 from a normal lighting state to right turn indication in accordance with the detection result.

The left and right headlights 12 and 13 are constituted of left and right main lights 12a and 13a with large size, provided on the upper side, and left and right small lights 12b and 13b provided on the lower side. The left and right turn signal lights 14 and 15 are arranged adjacent to the outside in the lateral direction of each of the main lights 12a and 13a. The turn signal lever 19 protruding from a column 18 of a steering 17 is operated to be bent upward from a neutral position to turn on the left turn switch 21 which is the left turn detection unit. Meanwhile, the turn signal lever 19 is operated to be bent downward to turn on the right turn switch 22 which is the right turn detection unit. Further, a headlight operation part 23 is provided at the top of the turn signal lever 19. The headlight operation part 23 is operated and rotated to thereby turn on or off a headlight switch 24. By virtue of the rotating operation of the headlight operation part 23, the main lights 12a and 13a can be switched into two states of a lighting state with normal brightness (low light) and a lighting state with higher brightness than normal (high light). The small lights 12b and 13b remain single brightness.

A lighting state selection lever 25 is provided on the lower side of the headlight operation part 23 of the turn signal lever 19. The lighting state selection lever 25 switches turning on/off of a selection switch 26 used for selecting whether or not the left and right headlights 12 and 13 are caused to perform left or right turn indication. The lighting state selection lever 25 and the selection switch 26 constitute indication selection means. When the lighting state selection lever 25 is at the initial position, the selection switch 26 is turned off, and each of the headlights 12 and 13 are in a normal lighting state. The lighting state selection lever 25 is rotated clockwise, whereby the selection switch 26 is turned on, and the left and right headlights 12 and 13 are caused to perform the left or right turn indication in response to the left or right turn operation of the turn signal lever 19. The vehicle 10 includes therein the left turn switch 21, the right turn switch 22, the headlight switch 24, the selection switch 26, the lighting control device 31, the headlight driving unit 32, and the turn signal light driving unit 33. These components constitute the left/right turn indicator 30. The lighting control device 31 performs lighting control of the left and right headlights 12 and 13 and the left and right turn signal lights 14 and 15.

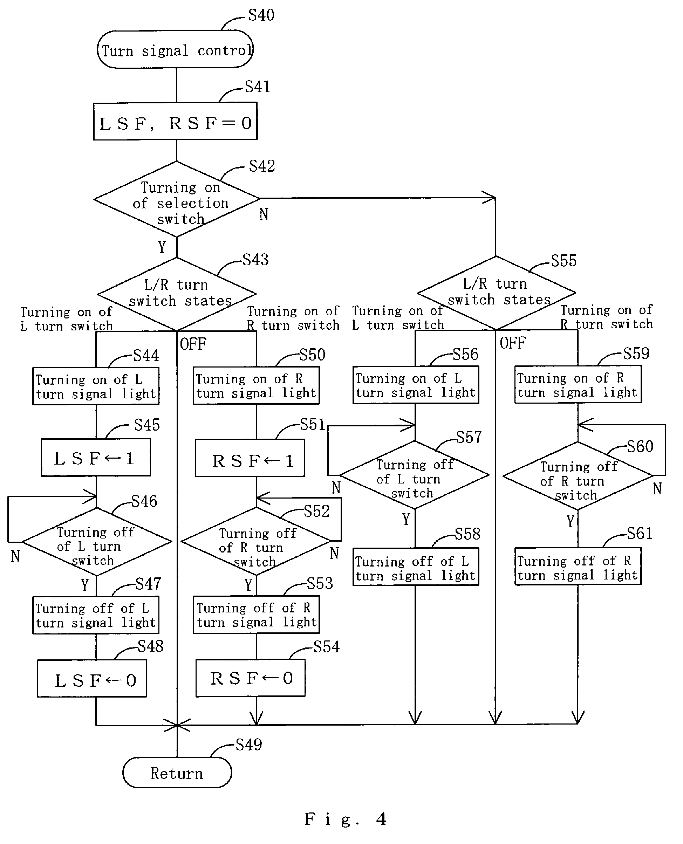

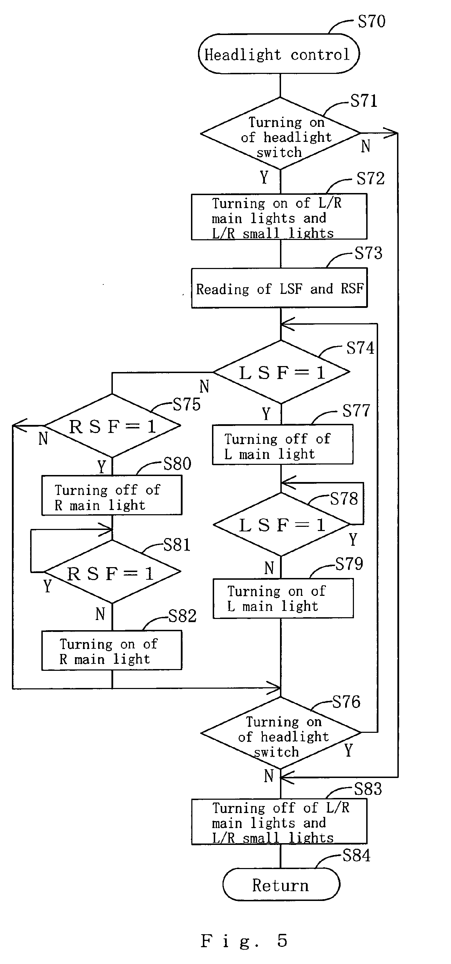

The lighting control device 31 has a microcomputer including a CPU, a ROM, a RAM, an I/O,etc. As shown in FIG. 3, the lighting control device 31 cooperates with the left turn switch 21, the right turn switch 22, the headlight switch 24, the selection switch 26, the headlight driving unit 32, and the turn signal light driving unit 33 in executing a "turn signal control program" shown in FIG. 4 and a "headlight lighting control program" shown in FIG. 5. In these programs, S represents a step, Y represents a determination of "YES", and N represents a determination of "NO". The lighting control device 31 is connected on the input side to the left turn switch 21, the right turn switch 22, the headlight switch 24, and the selection switch 26. Meanwhile, the lighting control device 31 is connected on the output side to the headlight driving unit 32 for driving the left and right headlights 12 and 13 and the turn signal light driving unit 33 for driving the left and right turn signal lights 14 and 15.

Next, the operation of the above embodiment will be described.

When a starter switch of the vehicle 10 is turned on, the lighting control device 31 starts the execution of the "turn signal control program" shown in FIG. 4 at step 40 (hereinafter indicated as S40) and, at the same time, starts the execution of the "headlight lighting control program" shown in FIG. 5 at S70. In the driving in a dark environment such as nighttime, the headlight switch 24 is turned on by virtue of the rotating operation of the headlight operation part 23. The left and right main lights 12a and 13a are made into the lighting state with normal brightness, and the left and right small lights 12b and 13b are turned on (S71 and S72).

At the start of the execution of the "turn signal control program", left and right turn signal switch flags LSF and RSF are respectively set to "0" (S41). When the lighting state selection lever 25 provided in the turn signal lever 19 is rotated clockwise, the selection switch 26 is turned on (S42), so that the left and right headlights 12 and 13 are caused to perform the left or right turn indication in response to the left or right turn operation of the turn signal lever 19. At this time, the turn signal lever 19 is not operated yet, and therefore, the left and right turn switches 21 and 22 are turned off (S43 and S49). When the selection switch 26 is turned on and the left and right turn switches 21 and 22 are turned off, the left and right turn signal switch flags LSF and RSF are set to "0". When the selection switch 26 is turned on and the left and right turn switches 21 and 22 are turned on, the left and right turn signal switch flags LSF and RSF are set to "1".

In the execution of the "headlight control program", when the left and right headlights 12 and 13 are turned on, the left and right turn signal switch flags LSF and RSF are read (S72 and S73). The left and right main lights 12a and 13a are made into the lighting state with normal brightness, and the left and right small lights 12b and 13b are turned on. However, since the left and right turn signal switch flags LSF and RSF are set to "0" at this time, the judgments in S74 and S75 is "NO", whereby the lighting state is maintained.

When the left turn operation of the turn signal lever 19 is performed, the left turn switch 21 is turned on, and thus the left turn signal light 14 is turned on, whereby the left turn signal switch flag LSF is changed to "1" (S43, S44, and S45). In response to this, the left main light 12a is turned off by the headlight driving unit 32, and this state is maintained until the left turn operation is released (S74, S77, and S78). Incidentally, the left small light 12b remains turned on. When the left turn operation of the turn signal lever 19 is released, the left turn switch 21 is turned off, and thus the left turn signal light 14 is turned off, whereby the left turn signal switch flag LSF is changed to "0" (S46, S47, and S48). In response to this, the left main light 12a is turned on by the headlight driving unit 32 (S79), and the processing from S74 to S76 is repeated until the headlight switch 24 is turned off to turn off the headlights 12 and 13 (S76).

When the right turn operation of the turn signal lever 19 is performed, the right turn switch 22 is turned on, and thus the right turn signal light 15 is turned on, whereby the right turn signal switch flag RSF is changed to "1" (S43, S50, and S51). In response to this, the right main light 13a is turned off by the headlight driving unit 32, and this state is maintained until the right turn operation is released (S75, S80, and S81). Incidentally, the right small light 13b remains turned on. When the right turn operation of the turn signal lever 19 is released, the right turn switch 22 is turned off, and thus the right turn signal light 15 is turned on, whereby the right turn signal switch flag RSF is changed to "0" (S52, S53, and S54). In response to this, the right main light 13a is turned on by the head light driving unit 32 (S81 and S82), and the processing from S74 to S79 is repeated until the headlight switch 24 is turned off to turn off the headlights 12 and 13 (S76). When the headlight switch 24 is turned off at, for example, the end of the driving of the vehicle, the headlights 12 and 13 are turned off (S76, S83, and S84).

As described above, according to the present embodiment, when the left and right headlights 12 and 13 provided on the left and right sides of the front part of the vehicle 10 are turned on, the turn signal lever 19 provided in the vehicle 10 is operated for a left turn operation, and in response to this operation, the left turn signal light 14 is turned on, and, at the same time, the left main light 12a is made into a turned-off state corresponding to the left turn indication. Meanwhile, when the right turn operation of the turn signal lever 19 is performed, the right turn signal light 15 is turned on, and, at the same time, the right main light 13a is made into a turned-off state corresponding to the right turn indication, in response to the operation. According to this constitution, the lighting states of the left and right turn signal lights 14 and 15 can be relatively clearly recognized. Consequently, in this embodiment, it is convenient because, in the dark environment such as nighttime where the left and right headlights 12 and 13 are made into the normal lighting state, oncoming vehicles and pedestrians can clearly recognize that the left or right main light 12a or 13a is changed from the normal lighting state to the turned-off state corresponding to the left or right turn indication and thus can surely know the left or right turning of the vehicle 10, and, at the same time, it is very useful in view of road safety. Further, according to this embodiment, the existing headlight can be used as it is, whereby the left and right turn indications can be performed at low cost by using the left and right headlights 12 and 13.

In this embodiment, in the case where the left and right headlights 12 and 13 need not be caused to perform the left or right turn indication, and may be kept in the normal lighting state, the lighting state selection lever 25 is not operated, whereby the selection switch 26 remains turned off (S42). Thus, when the left turn operation of the turn signal lever 19 is performed, the left turn switch 21 is turned on, and thus the left turn signal light 14 is turned on; however, the left turn signal switch flag LSF is maintained at "0" (S55 and S56). According to this constitution, the left headlight 12 remains turned on without being affected (S74, S75, and S76). When the left turn operation of the turn signal lever 19 is released, the left turn switch 21 is turned off, and thus the left turn signal light 14 is turned off; however, the left turn signal switch flag LSF is maintained at "0", whereby the left headlight 12 remains turned on without being affected (S74, S75, and S76). Also when the right turn operation of the turn signal lever 19 is performed, only the turning on and off of the right turn signal light 15 are performed as in the left turn operation. For this reason, the lighting states of the left and right headlights 12 and 13 are not affected.

In a first variation of the above embodiment, the brightness in the left and right turn indications may be rendered smaller than the brightness in the normal lighting state instead of the turning off of the left and right main lights 12a and 13a. According to this constitution, when the left turn operation of the turn signal lever 19 provided in the vehicle is performed, the brightness of the left main light 12a being turned on is, in response to this operation, clearly rendered smaller than normal brightness. Meanwhile, when the right turn operation of the turn signal lever 19 is performed, the brightness of the right main light 13a being turned on is rendered small in response to this operation. Thus, in the first variation, in the dark environment such as nighttime where the left and right headlights 12 and 13 are made into the normal lighting state, the brightness of the left and right main lights 12a and 13a, which are being turned on, is rendered small. This enables whereby oncoming vehicles and pedestrians to surely know the left or right turning of the vehicle.

In a second variation, with regard to the left and right turn indications, the left and right main lights 12a and 13a may be kept in a normal lighting state instead of being turned off, while the left and right small lights 12b and 13b may be turned off, or the brightness of the left and right small lights 12b and 13b may be rendered smaller than the brightness in the normal lighting state. According to this constitution, when the left turn operation of the turn signal lever 19 provided in the vehicle is performed, the left small light 12b being turned on is turned off or the brightness of the left small light 12b is clearly rendered smaller than normal brightness, in response to the operation. Meanwhile, when the right turn operation is performed, the right small right 13b being turned on is turned off or the brightness of the right small light 13b is rendered small, in response to this operation. Thus, also in the second variation, in the dark environment such as nighttime where the left and right headlights 12 and 13 are made into the normal lighting state, the left and right small lights 12b and 13b, which are being turned on, are turned off, or the brightness is rendered small. This enables oncoming vehicles and pedestrians to surely know the left or right turning of the vehicle.

Further, as a reference example of the present invention, the left headlight 12 or the right headlight 13 of red, green, or other colors may be turned on in the left or right turn indication. In this case, lamps emitting different colors are required to be provided in the left and right headlights 12 and 13. According to this reference example, when the left turn operation of the turn signal lever 19 provided in the vehicle is performed, the left headlight 12 being turned on is changed into a different color in response to this operation. Meanwhile, when the right turn operation of the turn signal lever 19 is performed, the right headlight 13 being turned on is changed into a different color in response to this operation. Thus, in the dark environment such as nighttime where the left and right headlights 12 and 13 are made into the normal lighting state, the headlights 12 and 13 being turned on are changed into a different color, whereby oncoming vehicles and pedestrians can surely know the left or right turning of the vehicle.

In the present embodiment and variations, the selection switch 26 is turned on or off by the operation of the lighting state selection lever 25, thereby to select whether or not the left headlight 12 or the right headlight 13 is caused to perform the left or right turn indication. However, instead of this, it is possible to cause the left and right headlights 12 and 13 to always perform the left and right turn indications independently of the turning on and off of the selection switch 26. In this case, omission of S42, S55 to S61 of the "turn signal control program" shown in FIG. 4 allows the left and right headlights 12 and 13 to always perform the left and right turn indications. According to this constitution, the lighting state selection lever 25 and the selection switch 26 can be omitted, and thus, the structure of the control device can be simplified. This can realize the left and right turn indications performed by the left and right headlights 12 and 13 at low cost. The left/right turn indicator and each component of the vehicle shown in the above embodiment are merely one example. The present invention can be variously modified and practiced without departing from the scope of the present invention.

Further, according to the present invention, a pair of headlights provided on the left and right front sides of a vehicle is used as it is. In response to left and right turn operations of a turn signal lever, the left headlight is changed from the normal lighting state to the left turn indication, and the right headlight is changed from a normal lighting state to right turn indication. Accordingly, it is convenient because, in a dark environment such as nighttime where the headlights are turned on, oncoming vehicles and pedestrians can surly know the left or right turning of the vehicle based on the change in the headlight from the normal lighting state to the left or right turn indication, and, at the same time, it is very useful in view of road safety.

## Claims

1. A left/right turn indicator for a vehicle (10) which, in the case where left and right headlights (12), (13) provided on left and right sides of a front part of the vehicle(10) and are in a normal lighting state, causes the left headlight (12) to change to left turn indication in response to a left turn operation of a turn signal lever(19) provided in the vehicle(10), and causes the right headlight(13) to change to right turn indication in response to a right turn operation of the turn signal lever(19),
wherein the left turn indication corresponds to turning off of the left headlight (12) or rendering the brightness of the left headlight(12) smaller than the brightness in the normal lighting state, and the right turn indication corresponds to turning off of the right headlight(13) or rendering the brightness of the right headlight(13) smaller than the brightness in the normal lighting state.

2. The left/right turn indicator for a vehicle as claimed in claim 1, wherein in response to the left or right turn operation of the turn signal lever (19), the left or right turn indication is selected, or the left or right turn indication is not selected.

3. A left/right turn indicator for a vehicle, comprising:
a headlight driving unit(32) which turns on and off left and right headlights(12), (13) provided on left and right sides of a front part of the vehicle(10);
a left/right turn detection unit(21),(22) which detects left or right turn operation of a turn signal lever(19) provided in the vehicle(10);
a lighting control device(31) which controls the headlight driving unit (32) so that the headlight driving unit (32) changes the left headlight (12) from a normal lighting state to left turn indication in response to a left turn detection result from the left/right turn detection unit and so that the headlight driving unit (32) changes the right headlight (13) from a normal lighting state to right turn indication in response to a right turn detection result from the left/right turn detection unit (21),(22),
wherein the left turn indication executed by the headlight driving unit(32) corresponds to turning off of the left headlight(12) or rendering lighting brightness of the left headlight(12) smaller than brightness in the normal lighting state, and the right turn indication executed by the headlight driving unit(32) corresponds to turning off of the right headlight(13) or rendering lighting brightness of the right headlight(13) smaller than brightness in the normal lighting state.

4. The left/right turn indicator for a vehicle as claimed in claim 3, further comprising: indication selection means(25)(26) for, in response to the left or right turn operation of the turn signal lever(19), selecting whether the left or right headlight (12), (13) is caused to perform the left or right turn indication or the left or right headlight is caused to continue the normal lighting state and outputting the selection result to the lighting control device(31).
